(19) **Europäisches Patentamt European Patent Office Office européen des brevets**

(11) **EP 4 779 276 A1**

(12) **EUROPEAN PATENT APPLICATION**

(43) Date of publication:
22.07.2026  Bulletin 2026/30

(21) Application number: 25152234.8

(22) Date of filing: 16.01.2025

(51) International Patent Classification (IPC):
*G01K 1/143* (2021.01)    *G01K 7/42* (2006.01)
*G01K 13/02* (2021.01)

(52) Cooperative Patent Classification (CPC):
**G01K 1/143; G01K 7/42; G01K 13/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ABB SCHWEIZ AG**
**5400 Baden (CH)**

(72) Inventors:
• **GEBHARDT, Joerg**
  **55130 Mainz (DE)**

• **SOSALE, Guruprasad**
  **80997 München (DE)**
• **SCHROEDER, Karsten**
  **32469 Petershagen (DE)**
• **ACKERMANN, Patric**
  **64347 Griesheim (DE)**
• **DASGUPTA, Subhashish**
  **560066 Bangalore (IN)**
• **SONG, Chen**
  **68163 Mannheim (DE)**

(74) Representative: **Maiwald GmbH**
**Engineering**
**Elisenhof**
**Elisenstrasse 3**
**80335 München (DE)**

(54) **METHOD FOR DETERMINING A RESPONSE TIME FOR A NON-INVASIVE TEMPERATURE SENSOR**

(57)    The disclosure relates to a method for determining a response time, RT, for a non-invasive temperature sensor (21), the method comprising:
- obtaining temperature measurement data, wherein the temperature measurement data is at least indicative of an outer surface temperature of the pipe (12), measured by the non-invasive temperature sensor (21);

- obtaining process parameter data indicative of pipe (12) and/or media characteristics;
- determining a time constant indicative for a physical delay effect, based on the process parameter data and temperature measurement data; and
- determining the RT for the non-invasive temperature sensor (21) based on the time delay parameter data.

Fig. 1

Processed by Luminess, 75001 PARIS (FR)

## Description

## TECHNICAL FIELD

The present invention relates to a method for determining a response time, RT, for a non-invasive temperature sensor, one or more computer program products, and a data processing system.

## BACKGROUND

In industrial processes, accurately measuring the temperature of fluids within pipes is important. Non-invasive temperature measurement techniques have emerged as an alternative, offering the advantage of attaching sensors to the exterior of pipes without direct contact with the fluid. This approach reduces installation costs, minimizes operational disruptions, and enhances safety by eliminating the need to breach the pipe wall. However, non-invasive temperature measurements face specific challenges that impact their accuracy and reliability. However, one of the primary issues with non-invasive sensors is the variable response times (RTs) they exhibit. The RT is the time it takes for the sensor to register a change in temperature after it occurs in the fluid. Unlike invasive sensors that are in direct contact with the fluid and have relatively consistent RTs, non-invasive sensors experience varying RTs due to several factors, such as different materials which have distinct thermal conductivities, different wall thickness of the pipe, fluid properties and others. This variability in RTs makes it challenging to predict how quickly a non-invasive sensor will respond to temperature changes within the fluid. Traditional methods to account for this variable RT often do not adequately account for the complex interplay of factors affecting RT. For example, they may use fixed correction factors or simplistic models that fail to adjust for varying conditions, leading to slower and potentially inaccurate temperature readings. This inadequacy hinders the ability to make timely and accurate decisions based on temperature data, affecting process optimization and control, for example.

## SUMMARY

The above problem or need is at least partially solved or alleviated by the subject matters of the independent claims of the present disclosure, wherein further examples are incorporated in the dependent claims.

According to an aspect of the present disclosure, there is provided a method for determining a response time, RT, for a non-invasive temperature sensor, the method comprising:

obtaining temperature measurement data, wherein the temperature measurement data is at least indicative of an outer surface temperature of the pipe, measured by the non-invasive temperature sensor;

obtaining process parameter data indicative of pipe and/or media characteristics; determining a time constant indicative for a physical delay effect, based on the process parameter data and temperature measurement data; and determining the RT for the non-invasive temperature sensor based on the time delay parameter data.

Generally, the response time RT may refer to a time delay between a temperature change occurring within the fluid inside a pipe and the point at which this change is accurately detected and reflected in the readings of a non-invasive temperature sensor attached to the pipe's exterior surface. Therefore, RT may be a measure of how quickly a temperature sensor responds to changes in the temperature of the medium (fluid) it is monitoring. For non-invasive sensors, this may involve the time it takes for heat to transfer from the fluid through the pipe wall to the sensor and for the sensor to register this change, for example.

The temperature measurement data may be obtained using a non-invasive temperature sensor that are arranged to the exterior of the pipe, for example. The non-invasive temperature sensors may measure the temperature of the outer surface of the pipe continuously or at defined intervals. For example, a non-invasive temperature sensor in this context may be a sensor system configured to measure the surface temperature, e.g. of a pipe. Optionally, the non-invasive temperature sensor may also measure, or estimate, an ambient temperature. The sensor system may contain a setup comprising one or more sensor elements (e.g. of a resistance thermometer probe type or of a thermo couple type). The obtained measurement data may be provided to a data processing system for further processing or processed within the non-invasive temperature sensors if the non-invasive temperature sensors have a processor, for example. This may be achieved by implementing of specific algorithms (AI) or machine learning (ML) in the non-invasive temperature sensors or in an external processing system. The deployment may be provided as a stand-alone device or as an upgrade for existing non-invasive temperature sensors, for example. There may also be the option of deployment via a web-based tool for commissioning and configuration. Additionally, the temperature measurement data may be further indicative of an ambient temperature surrounding the pipe. The ambient temperature may be measured directly or estimated based on predefined models and external data, for example. For instance, ambient temperature variations may influence the heat transfer rate between the medium inside the pipe, the pipe wall, and the surrounding environment. By considering the ambient temperature, the accuracy of the response time (RT) determination may be enhanced,

The process parameter may comprise pipe characteristics, and/or media characteristics. The process parameters regarding the pipe characteristics and media characteristics may be obtained in several ways. For example, previously known material and process parameters as standard values may be utilized. This may mean, existing documentation such as technical specifications or plant documentation may be consulted, or standard values or catalog data for commonly used materials and media may be used if specific data is not available. Additional sensors may be employed to directly measure certain parameters. For example, it may be possible to work with incomplete data and still perform RT estimation.

Heat transfer models may be applied to understand and quantify the transfer of heat from the medium (fluid) inside a pipe, through the pipe wall, to the outer surface where the non-invasive temperature sensor is mounted, and to the surroundings. The purpose of using these models may be to determine the delays (time constants) that may arise due to the physical properties of the system, enabling an accurate determination of the sensor's response time (RT). The model may consider, for example, a convection in the fluid, conduction through the pipe wall, and the conduction to the sensor surface, and conduction through the sensor device and / or through any insulation that may exist.

A time constant is calculated based on the process parameter data and/or the heat transfer model and/or the temperature measurement data obtained from the non-invasive temperature sensors. The time constant e.g., may represent how quickly the temperature changes in the fluid are reflected in the temperature measured by the sensor on the pipe's outer surface. The time constant may further account for the thermal inertia and heat transfer properties of the system components, for example.

The calculated time constants may be input into a model or algorithm that represents the system's thermal behavior, for example. The model may process these inputs to compute the RT, which is then used to adjust the temperature measurements accordingly. By doing so, the non-invasive temperature measurement system may become more reliable and accurate, effectively bridging the gap between the measured outer surface temperature of the pipe and the actual temperature of the fluid inside.

The method of the first aspect may in particular be an at least partially or fully computer implemented method. This means that at least one, multiple or all of the steps of the method may be carried out by a data processing system, which may comprise one or more data processing apparatuses, which may be in the form of computers or computing units, which may comprise one or more processors and data storages or memories. It may also be conceivable that the one or more non-invasive temperature sensors are the data processing apparatuses and thus carrying out at least one, multiple or all of the steps of the method. Different steps may be carried out by the same or by different data processing apparatuses of the data processing system.

In an example, the time constant is at least one or more of a surface non-invasive temperature sensor delay $\tau_s$, a pipe wall time constant $\tau_1$, and a boundary layer time constant $\tau_{RC}$. The surface non-invasive temperature sensor delay $\tau_s$ may represent the intrinsic delay of the non-invasive temperature sensor itself. It may account for the sensor's own response characteristics due to its design as a device, thermal mass, and the thermal contact resistance between the sensor and the pipe's outer surface. The pipe wall time constant $\tau_1$ may reflect the delay caused by heat conduction through the pipe wall from the fluid inside to the outer surface where the sensor is attached, for example. The pipe wall time constant $\tau_1$ may depend on the thermal properties of the pipe material (thermal conductivity, density, specific heat capacity) and the geometry of the pipe wall (thickness, area). The boundary layer time constant $\tau_{RC}$ may account for the delay due to the thermal resistance and capacitance of the fluid's boundary layer at the inner surface of the pipe. It may be influenced by the fluid's thermal properties, flow conditions (laminar or turbulent flow), and the convective heat transfer coefficient between the fluid and the pipe wall, for example. By considering at least one or more of these time constants, the method may accurately capture the physical delay effects in the temperature measurement system. Each time constant ($\tau_s$, $\tau_1$, $\tau_{RC}$) may be determined based on the process parameter data, which includes pipe characteristics and media characteristics. The determination may involve established thermal equations and models appropriate for the specific conditions and materials involved. This may involve applying fundamental heat transfer principles, including conduction, convection, and thermal resistance concepts, for example. Depending on the specific application and which physical delay effects are most significant, one or more of these time constants may be utilized. Considering $\tau_s$, $\tau_1$, $\tau_{RC}$ may provide a thorough representation of the various physical delays affecting non-invasive temperature measurements.

In an example, determining the RT comprises calculating the RT as the maximum of $\tau_s$, $\tau_1$, and $\tau_{RC}$. In thermal systems, multiple delay factors may influence the overall response time. However, the delay with the longest time constant often has the most significant impact on the system's response. By calculating the RT as the maximum of $\tau_s$, $\tau_1$, and $\tau_{RC}$, the method may ensure that the most substantial physical delay effect is accounted for in the temperature measurement. After calculating $\tau_s$, $\tau_1$, and $\tau_{RC}$, the method involves comparing these values. The RT is determined by selecting the maximum value among the three-time constants. Using the maximum of the time constants may simplify the calculation process, as no complex combination or weighting of the individual delays is required. This may allow for a quick and efficient determination of the RT, which may be particularly advantageous in real-time applications.

In an example, determining the RT comprises using a lumped-parameter model. This may simplify the thermal system by representing it with discrete elements of thermal resistance and capacitance, for example. In particular, a dynamic model may be selected from one or more of a Resistor-Capacitor Model, RC-model or a model which contains a first-order-lag-element, referred to here as PT1-model. The RC-model, or resistor-capacitor model, is a dynamic model that draws an analogy between thermal systems and electrical circuits composed of resistors and capacitors. In thermal analysis, the resistor may represent thermal resistance, the opposition to heat flow through a material, while the capacitor represents thermal capacitance, the ability of a material to store heat energy. By constructing a thermal equivalent circuit of the system using these concepts, the RC-model may capture the transient thermal behavior of the system. The time constant ($\tau$) of the system may be determined using the equation $\tau = R \times C$, where R is the total thermal resistance and C is the total thermal capacitance. This model may allow to account for the heat transfer and storage characteristics of the pipe wall, the sensor, and the fluid, enabling an accurate calculation of the RT, for example. Alternatively, the PT1-model, or first-order lag element model, may be used to represent where the output responds to an input change with a certain delay and exponential behavior characteristic of first-order systems, for example. This model may simplify the dynamic response to a first-order differential equation, assuming that the system's response may be characterized by a single time constant and proportional gain. The PT1-model may describe the temperature response using a transfer function. By fitting the measured temperature data to the PT1-model, the time constant $\tau_1$ may be extracted, indicating how quickly the non-invasive temperature sensor responds to changes in the medium's temperature. By using either the RC-model or the PT1-model, the transient thermal behavior may be captured, leading to a precise calculation of the RT. The selection between these models may allow to adapt to different system complexities and requirements, for example. The RC-model may be suitable when detailed thermal properties and multiple components need to be considered, providing a comprehensive representation of the thermal dynamics. The PT1-model may offer a simplified analysis appropriate for systems that can be approximated as first-order processes, making it particularly useful for real-time applications where computational efficiency is important. At least three distinct cases based on which time constant predominantly influences the RT may be considered. These cases may guide the selection and application of the appropriate dynamic model (RC-model or PT1-model) for accurate RT determination.

Case 1: $\tau_s$ Dominates: In this scenario, the pipe wall may have high thermal conductivity and is relatively thin, resulting in a minimal delay introduced by both the pipe wall and the medium. The PT1-model may be most appropriate here, as the primary delay is the sensor's inherent response time ($\tau_s$). The pipe wall's fast response minimizes the influence of additional thermal resistances, allowing the PT1-model to effectively capture the system's dynamics.

Case 2: $\tau_{RC}$ Dominates: This case may occur when there are substantial thermal resistances introduced by boundary layers, such as those found in gas flows within the pipe. These resistances may contribute significantly to the overall RT. The RC-model may be well-suited for this scenario, as it can accurately represent the thermal resistances and capacitances introduced by the boundary layer. By modeling these resistances, the RC-model provides a more precise determination of the RT in systems where boundary layer effects are prominent.

Case 3: $\tau_1$ Dominates: In a case where the pipe wall may be thick or composed of materials with low thermal conductivity, the RT is primarily influenced by the wall's thermal inertia and resistance. The RC-model may be the preferred choice for this case, as it may effectively capture the thermal resistances and capacitances associated with a thick or poorly conductive pipe wall. By accurately modeling these factors, the RC-model may ensure precise RT determination in systems where the pipe wall's properties are the dominant contributors to RT, for example.

By categorizing these cases, the most appropriate dynamic model (RC-model or PT1-model) to determine the RT accurately may be applied. Lumped-parameter models, as used herein, may include simplified representations of thermal systems, where distributed properties are reduced to discrete elements such as thermal resistance and capacitance. These models may encompass single-time-constant systems (e.g., PT1-models), higher-order systems (e.g., PT2-models), nonlinear models accounting for variable thermal properties, multi-node networks for segmented systems, or hybrid models combining lumped and distributed parameters for complex scenarios, for example.

In an example, the method may further comprise compensating the determined RT to obtain an estimate of the temperature of the medium within the pipe, and providing information related to the compensation to assess a reliability of the temperature measurement, and/or storing this information related to the compensation for further processing or analysis. The information related to the compensation to assess a reliability of the temperature measurement may comprise such as but not limited to an assessment of the amount of temperature compensation performed and/or an assessment of the reliability of the temperature measurement, for example. This compensation may work by applying a compensation algorithm or mathematical model that uses the determined RT to correct the measured temperatures, for example. The compensation algorithm may align the temperature sensor readings with the actual temperature changes occurring within the fluid, providing a more accurate estimate of the medium's temperature, for example. Utilizing the dynamic model, the compensation algorithm may mathematically adjust the measured temperature data. For example, in a first-order system modeled using a PT1-model, an inverse filter may be applied to correct for the exponential lag introduced by the RT. This algorithm may effectively align the sensor readings with the actual temperature changes occurring within the fluid. The mathematical implementation of the compensation involves calculating the compensated temperature using an equation of the type:

$$T_m = \tau \cdot \frac{dT}{dt} + T + \beta \cdot (T - T_{amb})$$

Where:

T_m: The compensated temperature (estimated medium temperature)
T: The measured surface temperature
$\tau$: The system's time constant
dT/dt: The time derivative of the measured temperature
$\beta$: a dimensionless real number, often a time-independent constant
T_amb: an estimate of the ambient temperature.

This equation may adjust the measured temperature by adding a term that accounts for the rate of change of the temperature and the system's response time, compensating for the delay. The equation also may contain a term which accounts for heat conduction errors, taking into account the possibility that the surface temperature in steady state may deviate still from the medium temperature, e.g. due to interaction with the ambient temperature T_amb. In some cases, this term may be beneficially neglected by assuming $\beta = 0$. This assumption is actually made, for the rest of this description, which is not to be understood as restriction to the claimed full solution with the option $\beta \neq 0$.

Implementing this compensation may enhance measurement accuracy and reliability by reducing the error introduced by the delay between the medium's temperature changes and the sensor readings. It may enable real-time process control by providing timely and accurate temperature information, important for controlling industrial processes, for example. In more complex thermal systems, higher-order derivatives or additional model parameters might be used:

$$T_m = T + \sum_{i=1}^{n} c_i \times \frac{d^i T}{dt^i}$$

Where:
$c_i$: Coefficients derived from the thermal model
Generally, if needed, the coefficients and constants in the abovementioned equation types may be, as a beneficial option, made time dependent, or a scheme can be set up for regularly updating them, e.g. in case of changes of the process, of the equipment or of the ambient conditions.

By overcoming one of the main limitations of non-invasive temperature measurements, variable and significant response times, the utility, and effectiveness of non-invasive temperature sensors may be enhanced. For example, by compensating for the RT, the method may also facilitate more efficient commissioning of non-invasive temperature measurement systems. Knowing the RT and being able to adjust for it during the setup phase may allow to qualify and calibrate the sensors accurately for specific applications, for example. This may reduce commissioning challenges and ensure that the temperature measurements are reliable from the outset. It may further be possible to make use of previously known material and process parameters as default values. This may mean it may be possible to work with incomplete data and still perform RT estimation and compensation.

The compensation value may be provided as a direct output to a user, such as through a display or software interface, or store it as a logged quantity for later analysis, for example. This may allow the user to evaluate how much the measured temperature was adjusted to account for response time delays, providing transparency and aiding in reliability assessments, for example. Additionally, the logged data may be used for trend analysis, diagnostics, or process optimization, making the system more versatile and useful for both real-time monitoring and retrospective evaluations, for example.

In an example, the method further comprises applying filtering techniques to the temperature measurement data to reduce measurement noise. Applying filtering techniques involves processing the temperature measurement data to reduce or eliminate unwanted noise components, thereby improving the accuracy and reliability of the temperature estimation. Measurement noise can originate from sensor electronic noise, fluctuations in ambient conditions, mechanical vibrations, and other external factors. During the compensation process, especially when calculating the derivative of the measured temperature (as required in the compensation algorithm), noise can be amplified, making it more prominent in the compensated signal.

To address this issue, the method incorporates filtering techniques to reduce measurement noise in the temperature data. This involves processing the temperature measurements with filters designed to attenuate unwanted noise components while preserving the true temperature signal. Several filtering techniques can be employed to mitigate measurement noise such as but not limited to, low-pass filters, Kalman filters, Savitzky-Golay filters, moving average filters.

Low-Pass Filters may allow low-frequency signals, which correspond to the actual temperature changes in the medium, to pass through while attenuating high-frequency noise components. They may be effective in smoothing out rapid fluctuations caused by noise.

Moving Average Filters may compute the average of a set number of data points, reducing random variations and smoothing the data. It may be simple to implement and effective for reducing short-term fluctuations, for example.

Digital Filters: Filters like Butterworth, Chebyshev, or Kalman filters can be designed with specific characteristics suitable for the data. They offer precise control over the filtering process and can be tailored to the noise characteristics.

Savitzky-Golay Filters may perform a local polynomial regression on the data to smooth it, preserving important features like peak heights and widths while reducing noise. They may be beneficial when it's wanted to maintain the shape of the temperature signal, for example.

In another example, adaptive filters may be utilized. These filters may adjust their parameters in real-time based on the input signal, making them effective in environments where the noise properties change over time, for example. They may be useful for maintaining optimal filtering performance under varying conditions, for example.

Aforementioned filtering techniques may be applied to the time series temperature data of the one or more temperature sensors before and/or after numeric calculation of the time-derivative, for example.

By applying these filtering techniques to the temperature measurement data, it may be ensured that the measurement data fed into the RT compensation algorithm may be as accurate and noise-free as possible. This may lead to more reliable determinations of the temperature derivatives and, consequently, more precise compensation for the RT, resulting in a better estimate of the medium's actual temperature, for example. It may be beneficial to consider a normalization step before filtering. Normalization may serve a complementary purpose by ensuring that the measurement data is within a consistent range, thereby enhancing the effectiveness of certain filtering algorithms, for example. Normalization may be beneficial in scenarios where the temperature sensors produce data with varying scales or offsets, for example. By standardizing the inputs, normalization may ensure that the filtering process operates more effectively and consistently. Additionally, some advanced filtering techniques, such as Kalman filters, may perform better or even require the data to be within specific scales for optimal performance. Normalizing the data may also improve numerical stability, preventing potential issues in digital signal processing algorithms and ensuring more stable and accurate filtering results, for example. Implementing filtering techniques may involve several considerations to ensure the effectiveness and reliability of temperature measurements. For example, understanding the source of noise may be important, as measurement noise can originate from various factors such as sensor electronic noise, fluctuations in ambient conditions, mechanical vibrations, and other external disturbances. Analyzing the characteristics of this noise may be therefore important for selecting the most appropriate filtering method tailored to the specific noise profile encountered in the measurement environment, for example. Balancing noise reduction with signal integrity may be also conceivable. It may be necessary to design the filtering process in a manner that minimizes noise without distorting the true temperature signa, for example. For example, over-filtering may lead to the loss of important signal information, including rapid temperature changes that are significant for precise process control. Therefore, the filter design may achieve an optimal balance between attenuating unwanted noise and preserving the fidelity of actual temperature variations within the medium. The timing of filter implementation may also play an important role in the overall effectiveness of the filtering process. One approach may be pre-compensation filtering, where filters are applied to the raw temperature measurement data before performing the response time (RT) compensation. This may help in reducing noise that could otherwise be amplified during subsequent differentiation operations inherent in the compensation algorithm. Alternatively, post-compensation filtering may involve smoothing out any residual noise after the compensation has been applied, ensuring that the final temperature estimates remain clean and accurate. In some cases, employing both pre- and post-compensation filtering techniques may provide good results, combining the advantages of both approaches to enhance measurement accuracy comprehensively.

In an example, the method may further comprise updating the RT during operation of the non-invasive temperature sensor based on updated temperature measurement data and process parameter data to account for changes in process or ambient conditions. For example, temperature measurement data may be continuously obtained, reflecting a current thermal state of the pipe. Simultaneously, data on various process parameters, including but not limited to pipe geometry, material properties, flow rates, pressure, and environmental conditions may be obtained. The acquired data may be analyzed in real-time to detect any deviations or shifts in process conditions, for example. For instance, an increase in flow rate or a change in the medium's properties may alter the thermal dynamics, necessitating an adjustment in the RT. Algorithms and dynamic models, such as RC-models or PT1-models, may be employed to interpret the data and determine the new RT values accurately. Based on the latest temperature and process parameter data, the RT may be determined using established mathematical models. This may ensure that the RT remains accurate and reflective of the current operational state, for example. The updated RT may be then integrated into the compensation algorithm, allowing for precise estimation of the medium's temperature despite changing conditions, for example. Therefore, by using updated measurement data and process parameters to refine the RT and compensation calculations, high precision in temperature estimations of the medium within the pipe may be ensured. This dynamic approach may not only enhance the accuracy and reliability of temperature measurements but also may improve the adaptability to varying operational conditions, for example. The expected response time (RT) values may vary based on several factors, including pipe geometry, material properties, medium characteristics, and environmental conditions. For example, in a scenario with simple pipe geometries and materials with high thermal conductivity (e.g., thin-walled metal pipes), RT values may be around 30 seconds. However, in more complex setups involving multi-layered pipe walls, internal coatings, or non-cylindrical shapes, RT values may increase, potentially exceeding 60 seconds due to additional thermal resistances and capacitances. Uncertainties in RT determination may stem from various sources such as uncertainty of input parameters from process and surroundings, measurement noise, model assumptions, dynamic process changes, or sensor calibration, for example. To address these uncertainties, continuous validation and calibration mechanisms may be incorporated, ensuring that RT estimates remain accurate throughout the operational lifespan of the measurement system.

For example, enhancing the accuracy of the RT calculation may involve assessing the uncertainty associated with the calculation. This may be achieved by evaluating input uncertainties, which may arise from measured, estimated, or externally sourced data such as supplier datasheets, for example. The uncertainty evaluation may utilize standard error propagation methods, as described in JCGM 100:2008 "Evaluation of measurement data - Guide to the expression of uncertainty in measurement" (GUM). By incorporating these, the resulting uncertainty alongside the RT calculation may be calculated and outputted. This output may provide a user with a clear indication of the reliability of the calculated RT under the specific conditions at hand, for example. Furthermore, the uncertainty output may serve as a basis for recommendations or guidance on how to operate with the calculated RT, ensuring more informed decision-making and process optimization, for example.

In an example, the process parameter data may comprise at least one or more of the following: pipe geometry, material properties of the pipe, properties of the medium. The geometry of the pipe, including dimensions such as diameter, wall thickness, and length, may influence the thermal dynamics of the system. For instance, a thicker pipe wall may result in a longer RT due to increased thermal inertia, while a narrower pipe diameter can affect heat transfer rates between the medium and the pipe wall. Accurate knowledge of pipe geometry may allow for precise modeling of heat transfer processes, which may be important for determining the time constants ($\tau_s$, $\tau_1$, $\tau_{RC}$.) that contribute to the overall RT. Further, different pipe materials may possess varying thermal conductivities and heat capacities, which may affect how quickly temperature changes propagate through the pipe wall. For example, metals with high thermal conductivity may facilitate faster heat transfer, potentially reducing RT, whereas insulating materials may increase RT, for example. By taking into account specific geometric and material characteristics, a more accurate model of the thermal interactions between the medium and the pipe wall can be established, leading to more accurate RT determinations and consequently more reliable temperature estimates. Further, properties such as flow rate, viscosity, density, and specific heat capacity of the medium may influence the rate at which heat is transferred between the medium and the pipe wall. A higher flow rate can lead to more efficient heat transfer, potentially decreasing RT, while a more viscous medium may slow down the thermal response. The phase (liquid, gas) and composition of the medium may also affect thermal properties and heat transfer dynamics. For instance, a medium with a higher specific heat capacity will require more energy to change its temperature, impacting the RT of the measurement system. By incorporating detailed process parameter data, such as pipe geometry, material properties, and medium properties, it may be ensured that the RT determination is comprehensive and reflective of the actual operating conditions, for example.

In an example, a warning may be issued if the RT exceeds a predetermined threshold or if the process dynamics are within a range of the RT of the measurement system, or if a potential temperature compensation exceeds a predetermined threshold. For example, when the RT surpasses a set threshold, this may indicate that a delay is experienced that could compromise the accuracy of temperature estimations, for example, or its usefulness, e.g. if the temperature measurement may serve as a limit switch, where time can be critical. This situation may e.g., arise from factors such as increased pipe wall thickness, changes in material properties, or adverse environmental conditions. An excessive RT may lead to inaccurate temperature readings, delayed detection of temperature anomalies, and potential safety hazards, all of which may be detrimental to efficient process control, for example. Additionally, scenarios where the inherent dynamics of the process may be addressed, such as the rate of temperature changes, are within the RT range of the measurement system, for example. In such cases, it may be difficult to capture rapid temperature fluctuations accurately, resulting in blurred or lagging temperature profiles, for example. For example, this may be done, e.g. by comparing the calculated RT to the oscillation periods of relevant Fourier modes of the temperature data, e.g., as time series. A warning may then be issued if the periods of such relevant Fourier modes are not larger than a predetermined factor (e.g. 2 or 5 or 10) times RT, for example.

By issuing warnings in these situations, an operator may be alerted to the potential limitations, enabling them to take corrective actions such as recalibrating sensors, adjusting process parameters, or enhancing filtering techniques to maintain measurement integrity, for example. Algorithms and dynamic models may be leveraged to analyze this data in real-time, detecting any deviations or shifts in process conditions that could affect the RT, for example. When such conditions are identified, warnings may be generated, e.g., through an intuitive user interface, which may include visual indicators, audible alerts, or automated notifications, or similar.

Furthermore, warnings may be issued if the amount of temperature compensation suggested by the system exceeds a predetermined threshold. Actually, it may be beneficial to output and/or log the calculated proposed compensation values. These may be used as an information for engineering limit switch or other process control parameters, e.g. reaction times or safety margins (e.g. temperature intervals), for example. The displayed and/or logged compensation may also be split and beneficially marked to be of the dynamic type, e.g. given by the current value for $\tau \cdot dT/dt$, and/or static, e.g. given by the current value for $\beta \cdot (T_m - T_{amb})$, and/or it can be a beneficial embodiment to give the total compensation which can e.g. be determined as the sum of both, for example.

In an example, the measurement data may be further indicative of one or more of the following: flow rate of the medium, pressure within the pipe, and/or temperature of the environment of the pipe, obtained by additional sensors. By incorporating flow rate data, the convective heat transfer dynamics may be understood in a better way, as higher flow rates typically enhance heat transfer and potentially reduce RT, while lower flow rates may increase thermal inertia and RT. Pressure measurements may provide insights into the medium's density and viscosity, which may directly affect heat transfer characteristics and, consequently, the RT, for example. Additionally, monitoring the environmental temperature around the pipe may allow to account for external thermal influences that may alter the temperature gradient between the medium and the pipe wall, thereby impacting RT, for example.

In an example, obtaining the process parameter data may further comprise prompting a user, via a human-machine interface, to input application-specific parameters. The obtaining of process parameter data may include actively engaging the user through a human-machine interface (HMI) to input application-specific parameters. For example, upon initiating the system, the user may be presented with a questionnaire or menu-based interface that guides them through the process of entering relevant data. This may include details such as pipe characteristics, material properties, or others. For instance, the user may be prompted to specify the pipe geometry, including dimensions like diameter and wall thickness, as well as the material properties of the pipe.

Based on the input parameters, the HMI may facilitate the transfer of this data to the processing system, where the RT is determined. The HMI may display real-time updates of the RT estimates, allowing users to monitor and verify the accuracy of the measurements. Additionally, the HMI may provide options to activate or adjust the RT compensation algorithms, ensuring that temperature estimations remain precise despite any inherent delays in the measurement system, for example. The HMI may be designed to assist the user by offering recommendations and best practices based on the entered parameters, for example. For instance, if the calculated RT may exceed a predetermined threshold, the HMI may suggest recalibrating the sensors, adjusting process parameters, or performing maintenance checks, or similar. These recommendations may help the user to make informed decisions to maintain the integrity and accuracy of the temperature measurements, for example. The HMI may provide comprehensive data visualization tools that may display temperature trends, RT estimates, and the status of various sensors, for example. The user may access detailed reports and logs that document the performance of the measurement system over time, aiding in troubleshooting and performance optimization, for example. Further, the HMI may support real-time adjustments, allowing the user to modify parameters on-the-fly as process conditions change, for example. The HMI may be integrated with the system's core functionalities, ensuring that user inputs directly influence RT calculations and compensation mechanisms, for example. By providing a centralized platform for data entry, monitoring, and system control, the HMI may enhance the overall usability and effectiveness of the temperature measurement system, for example.

In an example, in a case the pipe geometry is complex, the process parameter data may be further indicative of a complex geometry of the pipe. Preferably, a one-dimensional (1D) model may be implemented that may assume either an approximate planar geometry of the pipe wall or leverages the cylindrical symmetry inherent in most pipe setups, for example. This simplification may enable the heat equation to be solved along the radial coordinate efficiently, reducing computational complexity while maintaining accuracy. For pipes with additional complexities, the model may be further refined to include these layers, ensuring that their impact on heat transfer and RT is accurately represented. Complex pipe structures, such as multi-layered walls, may require numerical modelling or experimental determination of $\tau$. This complexity may arise from various factors such as multi-layered pipe walls, non-cylindrical shapes, internal coatings, or the presence of internal structures like liners, or similar. For pipes with complex geometries, analytical solutions for heat transfer and RT calculation may become impractical. Instead, numerical modeling techniques such as Finite Element Analysis (FEA), Finite Difference Methods (FDM), or Finite Volume Methods (FVM) may be utilized. These models may accurately simulate heat transfer processes within intricate geometrical configurations by discretizing the pipe structure into smaller, manageable elements, for example. In cases where creating detailed numerical models may be impractical, surrogate models like analytical formulas or artificial intelligence (AI) structures, such as neural networks, may be employed. These surrogate models may be trained based on extensive simulations from underlying finite element models, enabling rapid and accurate RT estimations without the need for real-time complex computations, for example. Additionally, experimental determination of the pipe time constant ($\tau_{RC}$) may be conceivable when theoretical calculations are challenging due to geometric complexities. This empirical approach may ensure that accurate RT values can still be obtained and utilized in the compensation process outlined in previous claims. The method may be versatile enough to accommodate both circular and non-circular pipe walls, as well as fluid containers or vessel walls, by adjusting the modeling approach accordingly. In situations where inner pipe wall deposits occur, additional time constant may be estimated for the deposit layer based on its thickness and material properties, integrating this into the overall RT calculation to maintain measurement accuracy, for example.

In an example, the method may further comprise detecting changes in the RT as an indicator of process changes, such as deposits on the inner pipe wall. During the initial commissioning and setup phase, a baseline RT may be established under normal operating conditions, for example. This baseline may e.g., serve as a reference point for detecting future changes. For example, algorithms may analyze the RT data over time to identify statistically significant deviations from the baseline. These algorithms may incorporate thresholds, trend analysis, and anomaly detection techniques to differentiate between normal operational fluctuations and process changes, for example. When a change in RT is detected, this change may be correlated with other process parameters (such as flow rate, pressure, and environmental temperature) to determine the likely cause. For instance, a gradual increase in RT may be coupled with a stable flow rate and pressure, which then may indicate the accumulation of deposits on the inner pipe wall.

According to a second aspect of this disclosure, there are provided one or more computer program products comprising instructions which, when executed by one or more data processing apparatuses, cause the one or more data processing apparatuses to carry out the method of the first aspect of this disclosure.

The computer program product(s) may be a computer program or computer programs as such, meaning a computer program consisting of or comprising program code to be executed by the data processing apparatus, in particular computer.

Alternatively, the computer program product(s) may be a product or products such as a data storage(s), in particular computer-readable data storage medium(s), on which the computer program(s) may be temporarily or permanently stored.

According to a third aspect of this disclosure, there is provided a data processing system configured to carry out the method according to the first aspect of this disclosure.

It is noted that the above aspects, examples, and features may be combined with each other irrespective of the aspect involved.

The above and other aspects of the present disclosure will become apparent from and elucidated with reference to the examples described hereinafter.

## BRIEF DESCRIPTION OF THE DRAWINGS

Exemplary embodiments will be further described with reference to Figures, wherein:

Figure 1 shows a measuring system; and
Figure 2 shows a method for determining a response time, RT, for a non-invasive temperature sensor.

The figures are schematic only and not true to scale. In principle, identical or like parts, elements and/or steps are provided with identical or like reference numerals in the Figures.

## DETAILED DESCRIPTION OF THE INVENTION

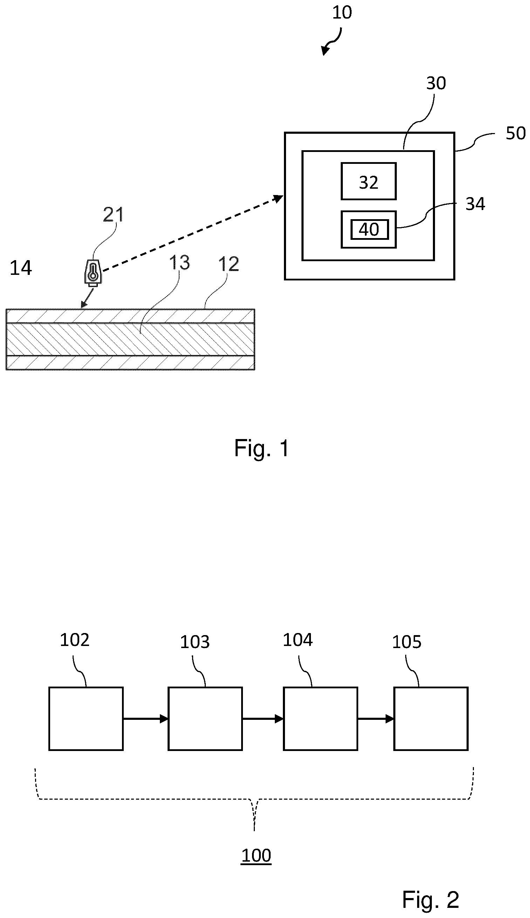

Figure 1 schematically shows a measuring system 10, which comprises a data processing system 50 and a non-invasive temperature sensor 21 provided at a pipe 12 filled with a medium 13. In this example, the data processing system 50, in particular the data processing apparatus 30, in particular its processor 32, may be used to carry out the method 100 for determining a response time, RT, for a non-invasive temperature sensor 21. However, it may also be conceivable that the non-invasive temperature sensor 21, seen as a device, is, or includes, the data processing apparatus 30 with the respective processor 32 and thus carries out at least one, multiple or all of the steps of the method 100 schematically illustrated in Fig. 1. The exemplary data processing apparatus 30 comprises at least one processing unit or processor 32, e.g., a CPU, and at least one computer program product 34, e.g., in the form of a computer-readable storage medium. Computer programs 40 are stored on the computer program products 34. One or more computer elements of the computer program 40 in the data processing system 50, may form parts of the computer programs 40, e.g., different program code for different functions or steps of the method 100. Such a computer element may be an AI component, such as neural networks, or an algorithm for compensating, or a mathematical model that uses the determined RT to correct the measured temperatures, for example. For example, during operation, the non-invasive temperature sensor 21 may continuously measure the outer surface temperature of the pipe 12 and optionally ambient temperature 14. Ambient temperature 14 may be measured/estimated, e.g. by standard element like a thermocouple in the sensor system 21, or in the system 50, for example.

This temperature data, along with process parameter data such as flow rate, pressure, and environmental temperature, may be fed into the data processing system 50, indicated by the dotted arrow. The data processing apparatus 30 processes this information using the computer program 40 to determine the RT based on the current operating conditions. Once the RT is determined, the data processing system 50 may employ a compensation algorithm to adjust the measured temperature data, accounting for any delays or distortions caused by the response time, for example. For instance, using a formula like $T_m = T + \tau \times dT/dt$, where $T_m$ is the compensated temperature of the medium 13, T is the measured surface temperature, and $\tau$ is the RT, the data processing system 50 may correct the temperature readings to more accurately reflect the actual temperature of the medium 13. The ambient temperature is not limited to a specific measured value but may comprise any environmental data that characterizes the external thermal conditions around the pipe, for example. This may include, for example, the temperature of the air near the pipe or the surroundings of the pipe.

Figure 2 shows a method 100 for determining a response time, RT, for a non-invasive temperature sensor 21. In a first step 102, temperature measurement data, which represents an estimate or approximation of the outer surface temperature of the pipe 12 and optionally an estimate or approximation of ambient temperature 12, may be obtained. This temperature measurement data may be obtained using the non-invasive temperature sensor 21 provided at the outer surface of a pipe 12. This non-invasive temperature sensor 21 may operate without direct contact with the medium 13 inside the pipe 12. In as second step 103, process parameter data that provide information about the pipe12 and the medium 13 is obtained. This may include characteristics such as the geometry (e.g., diameter, wall thickness) of the pipe 12, material properties of the pipe 12 (e.g., thermal conductivity, density), and properties of the medium 13 (e.g., flow rate, viscosity, specific heat capacity). In a third step 104, the obtained temperature measurement data and process parameter data may serve as a basis for determining a time constant that reflects the physical delay effects inherent in the measurement system 10. This time constant may account for factors or time delay parameters, such as a surface sensor delay $\tau_s$, a pipe wall time constant $\tau_1$ , and a boundary layer time constant $\tau_{RC}$. These time constants describe a typical time scale which may needed for the sensor temperature, the pipe wall temperature, or the boundary layer temperature, to follow a temperature jump at an adjacent surface, for example. By analyzing these parameters, the data processing system 50 may model the dynamic response of the temperature sensors, thereby identifying the specific time delays that affect measurement accuracy. Based on the determined time delay parameters, the overall response time (RT) of the non-invasive temperature sensors 21 is determined in a fourth step 105. The RT may represent a total delay between a change in the temperature of the medium 13 and the corresponding change detected by the non-invasive temperature sensor 21. In an optional step 106, the measured temperature data may be compensated, ensuring that the temperature estimations may accurately reflect the actual conditions within the pipe 12 despite any inherent delays. The RT value may e.g., be used in compensation algorithms to adjust the temperature readings, thereby enhancing the precision and reliability of the measurement system 10.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the context of the present invention any numerical value indicated is typically associated with an interval of accuracy that the person skilled in the art will understand to still ensure the technical effect of the feature in question. As used herein, the deviation from the indicated numerical value is in the range of $\pm$ 10%, and preferably of $\pm$ 5%. The aforementioned deviation from the indicated numerical interval of $\pm$ 10%, and preferably of $\pm$ 5% is also indicated by the terms "about" and "approximately" used herein with respect to a numerical value.

Any reference signs in the claims should not be construed as limiting the scope.

**Claims**

1. A method (100) for determining a response time, RT, for a non-invasive temperature sensor (21), the method comprising:

   - obtaining temperature measurement data, wherein the temperature measurement data is at least indicative of an outer surface temperature of the pipe (12), measured by the non-invasive temperature sensor (21);
   - obtaining process parameter data indicative of pipe (12) and/or media (13) characteristics;
   - determining a time constant indicative for a physical delay effect, based on the process parameter data and temperature measurement data; and
   - determining the RT for the non-invasive temperature sensor (21) based on the time delay parameter data.

2. The method (100) according to claim 1, wherein the time constant is at least one or more of a surface non-invasive temperature sensor (21) delay $\tau_s$, a pipe (12) wall time constant $\tau_1$, and a boundary layer time constant $\tau_{RC}$.

3. The method (100) according to claim 1 or 2, wherein determining the RT comprises calculating the RT as the maximum of $\tau_s$, $\tau_1$, and $\tau_{RC}$.

4. The method (100) of any of the preceding claims, wherein determining the RT comprises using a lumped-parameter model.

5. The method (100) of any of the preceding claims, the method (100) further comprises compensating the determined RT to obtain an estimate of the temperature of the medium (13) within the pipe (12), and providing information related to the compensation to assess a reliability of the temperature measurement, and/or storing this information related to the compensation for further processing or analysis.

6. The method (100) of claim 5, further comprising applying filtering techniques to the temperature measurement data to reduce measurement noise.

7. The method (100) of claim 5, further comprising updating the RT during operation of the non-invasive temperature sensor (21) based on updated temperature measurement data and process parameter data to account for changes in process conditions.

8. The method (100) of any of the preceding claims, wherein the process parameter data comprises at least one or more of the following: pipe (12) geometry, material properties of the pipe (12), properties of the medium (13).

9. The method (100) of any of the preceding claims, wherein a warning is issued if the RT exceeds a predetermined threshold or if the process dynamics are within a range of the RT of the measurement system, or if a potential temperature compensation exceeds a predetermined threshold.

10. The method (100) of any of the preceding claims, wherein the measurement data is further indicative of one or more of the following: flow rate of the medium (13), pressure within the pipe (12), and/or temperature of the environment of the pipe (12), obtained by additional sensors.

11. The method (100) of any of the preceding claims, wherein obtaining the process parameter data further comprises prompting a user, via a human-machine interface, to input application-specific parameters.

12. The method (100) of any of the preceding claims, wherein in a case the pipe (12) geometry is complex, the process parameter data is further indicative of a complex geometry of the pipe (12).

13. The method (100) of any of the preceding claims, further comprising detecting changes in the RT as an indicator of process changes, such as deposits on the inner pipe (12) wall.

14. One or more computer program products (34, 40) comprising instructions which, when executed by one or more data processing apparatuses (30), cause the one or more data processing apparatuses (30) to carry out the method (100) of any one of the previous claims.

15. A data processing system (50) configured to carry out the method (100) of any one of claims 1 to 13.

Fig. 1

Fig. 2

Europäisches
Patentamt

European
Patent Office

Office européen
des brevets

# EUROPEAN SEARCH REPORT

Application Number

EP 25 15 2234

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/293497 A1 (RUD JASON HAROLD [US] ET AL) 26 September 2019 (2019-09-26) * paragraphs [0001], [0008], [0009], [0024], [0027], [0029], [0031], [0033] - [0036], [0043], [0045] - [0050], [0052], [0054] * | 1-15 | INV. G01K1/143 G01K7/42 G01K13/02 |
| A | CHOHAN R K ET AL: "Response time correlation for industrial temperature sensors", JOURNAL OF PHYSICS E. SCIENTIFIC INSTRUMENTS, IOP PUBLISHING, BRISTOL, GB, vol. 19, no. 10, 1 October 1986 (1986-10-01), pages 786-787, XP020017682, ISSN: 0022-3735, DOI: 10.1088/0022-3735/19/10/004 * the whole document * | 1-15 | |
| A | CN 118 670 553 A (UNIV NORTHWESTERN) 20 September 2024 (2024-09-20) * paragraphs [0003], [0009], [0012] - [0018], [0020], [0072], [0095], [0108], [0111] * | 6,10 | TECHNICAL FIELDS SEARCHED (IPC) G01K |

-----

-----

-/--

The present search report has been drawn up for all claims

| Place of search | Date of completion of the search | Examiner |
|---|---|---|
| The Hague | 16 June 2025 | Phleps, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 15 2234

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Gebhardt Jörg ET AL: "Zuverlässige Messung der Oberflächentemperatur: ein Schritt zur Etablierung nicht-invasiver Temperaturmessung in der Industrie Reliable measurement of surface temperature: a step to widespread non-invasive T-measurement in industry", Proceedings of: 19. ITG/GMA-Fachtagung "Sensoren und Messsysteme", 27 June 2018 (2018-06-27), pages 157-160, XP093286094, ISBN: 978-3-8007-4683-5 Retrieved from the Internet: URL:https://ieeexplore.ieee.org/stamp/stamp.jsp?arnumber=8436161 [retrieved on 2025-06-11] * the whole document * | 10 | |
| A | Anonymous: "TSP341-N High-precision non-invasive temperature measurement", ABB MEASUREMENT & ANALYTICS ¦ WHITE PAPER, 1 August 2022 (2022-08-01), XP093286113, Retrieved from the Internet: URL:https://img.chemicalprocessing.com/files/base/ebm/chemicalprocessing/document/2022/08/1661879530474-goodbyethermowellabbintroducinghighprecisionnoninvasivetempmeasurement.pdf?dl=1661879530474-goodbyethermowellabbintroducinghighprecisionnoninvasivetempmeasurement.pdf [retrieved on 2025-06-11] * the whole document * | 10 | TECHNICAL FIELDS SEARCHED (IPC) |
| A | EP 3 742 139 B1 (ABB SCHWEIZ AG [CH]) 21 December 2022 (2022-12-21) * columns 1,15,21, * | 13 | |

The present search report has been drawn up for all claims

| Place of search | Date of completion of the search | Examiner |
|---|---|---|
| The Hague | 16 June 2025 | Phleps, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 779 276 A1

## ANNEX TO THE EUROPEAN SEARCH REPORT
## ON EUROPEAN PATENT APPLICATION NO.

EP 25 15 2234

This annex lists the patent family members relating to the patent documents cited in  the above-mentioned European search report.
The members are as contained in the European Patent Office EDP file on
The European Patent Office is in no way liable for these particulars which are merely given for the purpose of information.

16-06-2025

| Patent document cited in search report | Publication date | Patent family member(s) | | Publication date |
|---|---|---|---|---|
| US 2019293497 A1 | 26-09-2019 | NONE | | |
| CN 118670553 A | 20-09-2024 | NONE | | |
| EP 3742139 B1 | 21-12-2022 | CN | 113825989 A | 21-12-2021 |
| | | EP | 3742139 A1 | 25-11-2020 |
| | | EP | 3973262 A1 | 30-03-2022 |
| | | US | 2022074798 A1 | 10-03-2022 |
| | | WO | 2020234156 A1 | 26-11-2020 |

EPO FORM P0459

For more details about this annex : see Official Journal of the European Patent Office, No. 12/82